# EUROPÄISCHE PATENTSCHRIFT

(11) **EP 2 715 180 B1**
(45) Veröffentlichungstag und Bekanntmachung des Hinweises auf die Patenterteilung: **30.03.2016**
(21) Anmeldenummer: 12723467.2
(22) Anmeldetag: 23.05.2012
(51) Int. Cl.: F16D 65/12

(54) **RADBREMSSCHEIBEN**
WHEEL-MOUNTED BRAKE DISKS
DISQUES DE FREINS MONTÉS SUR ROUES

(30) Priorität: 26.05.2011 DE 102011102518
(43) Veröffentlichungstag der Anmeldung: 09.04.2014
(73) Patentinhaber: KNORR-BREMSE Systeme für Schienenfahrzeuge GmbH, 80809 München (DE)
(72) Erfinder: NIESSNER, Matthias, 85737 Ismaning (DE); SEIFERT, Peter, 85368 Dietersheim (DE)
(86) Internationale Anmeldenummer: PCT/EP2012/059599
(87) Internationale Veröffentlichungsnummer: WO 2012/160094

(56) Entgegenhaltungen:
- DE-U1- 29 604 157
- DE-U1-202009 013 476
- GB-A- 2 390 885

## Beschreibung

Die Erfindung betrifft Radbremsscheiben nach dem Oberbegriff des Anspruchs 1, wie z.B. aus GB-A-2 390 885 bekannt.

Bei bekannten Schienenrädern sind die beidseitig an dem Radkörper angeschlossenen Radbremsscheiben durch eine Vielzahl von über den Umfang verteilten Durchgangsschrauben befestigt, wobei sie den Radkörper durchtreten und mit ihrem jeweiligen Kopf in einer Senkung der einen Radbremsscheibe und mit einer aufgeschraubten Mutter in einer Senkung der anderen Radbremsscheibe einliegen. Die Verbindung der Radbremsscheiben zum Radkörper kann im Bereich einer Radnabe, eines Radsteges oder eines Radkranzes erfolgen.

Bei leistungsfähigen, modernen Radbremsscheiben hat sich die direkte Verschraubung der beiden Radbremsscheiben gegen den Radsteg durchgesetzt. Bei der Auslegung der Verschraubung wird eine maximal mögliche Schraubenlänge angestrebt, was durch die Verwendung von Hülsen unter dem Schraubenkopf bzw. unter dem Schraubenkopf und der Mutter erreicht wird.

Des Weiteren ist es bekannt, anstelle der Hülsen oder zusätzlich Spannscheiben in Form von Tellerfedern einzusetzen, die der Verbesserung der Nachgiebigkeit der verspannten Teile zur Kompensation von bremsbedingten Verformungen der verschraubten Teile sowie kurzzeitig auftretender Stöße dienen.

Allerdings wird diese vorteilhafte Wirkung erkauft durch negative Effekte, die die Lebensdauer der Verbindung deutlich verkürzen können. So vervielfacht sich bei Einsatz der Spannscheiben die Anzahl der verschraubten Fugen und damit mögliche Setzbeträge.

Darüber hinaus schränken die Spannscheiben die Nutzungstemperatur der Radbremsscheiben ein, da die Spannscheiben nicht über ihre Anlasstemperatur erhitzt werden dürfen. Anderenfalls verlieren sie ihre Federwirkung und reduzieren die Standzeit der Verschraubung. Auch führt die Verwendung von Spannscheiben zu einer Vergrößerung der Anzahl der zu montierenden Bauteile, wodurch sich das Risiko einer Fehlmontage deutlich erhöht.

Des Weiteren erfordert der Einsatz der Spannscheiben einen relativ großen Durchmesser der Senkung, was die Einsatzmöglichkeiten von starren oder flexiblen Sinterbelägen mit kleinen Reibelementen einschränkt, insbesondere, da die Reibelemente am Bohrungsrand hängenbleiben und zerstört werden können.

Zur Minimierung des Bohrungsdurchmessers ist zwar bereits vorgeschlagen worden, Einpressbuchsen in die Senkung einzufügen, jedoch kann dann die Bremsscheibe thermisch nur gering belastet werden, weshalb sich diese Konstruktion in der Praxis nicht bewährt, d.h. durchgesetzt hat.

Neben der eigentlichen Verschraubung weisen die meisten Radbremsscheiben Elemente zur Zentrierung auf dem Radkörper auf, beispielsweise in Form von in den Durchgangsbohrungen des Radkörpers gehaltenen Hülsen, die jeweils zapfenförmig ausgebildete Enden besitzen, die in Nuten der Reibscheiben eingreifen.

Grundsätzlich soll der Durchmesser der jeweiligen Senkung möglichst klein ausgeführt werden, wobei dieser gerade so groß ist, dass ein Werkzeug zum Anziehen der Verschraubung eingeführt werden kann bzw. bei Einsatz der genannten Spannscheiben diese sich ausdehnen können. Durch die kleine Öffnung zur Reibfläche soll das Reibungsverhalten möglichst wenig beeinträchtigt und das Hängenbleiben von Belagelementen verhindert werden.

Der Boden der Senkung wird in der Regel möglichst mit hoher Steifigkeit ausgeführt, d.h., die Bodenstärke wird in Relation zum Durchmesser der Durchgangsbohrung der jeweiligen Radbremsscheibe groß gewählt. Dabei ist das Verhältnis der Hälfte des Durchmesserunterschieds von zylindrischer Senkung und Durchgangsbohrung zur Bodenstärke bei Verbindungen ohne Spannscheiben bzw. Federelementen bevorzugt kleiner 1, wodurch eine steife Anlagefläche erreicht wird, die sich praktisch nicht durchbiegen kann.

Beim Bremsen erfährt die jeweilige Radbremsscheibe durch die Erwärmung an der Oberfläche eine Verwölbung im Querschnitt, die zu einer Zugbelastung der Durchgangsschraube führt. Bei der üblichen Ausführung mit steifem Boden ergibt sich durch die Belastung unmittelbar eine Schraubenzusatzkraft, die aus der Verformung und Klemmlänge resultiert. Die Verwölbung kann derart hoch sein, dass sich die Anlagefläche, mit der die Radbremsscheibe am Radkörper anliegt, abhebt. Neben der durch die Verwölbung entstehenden Zugkraft bewirkt auch eine im Laufe der Bremsung bzw. durch Eigenspannungen entstehende Tellerung/Schirmung der Radbremsscheibe eine Zusatzkraft auf die Durchgangsschraube.

Der Erfindung liegt die Aufgabe zugrunde, Radbremsscheiben der gattungsgemäßen Art so weiterzuentwickeln, dass bei Optimierung der Reibfläche die Standzeit der Durchgangsschrauben erhöht und damit die Betriebssicherheit des Schienenrades insgesamt verbessert wird.

Diese Aufgabe wird durch Radbremsscheiben mit den Merkmalen des Anspruchs 1 gelöst.

Durch die Erfindung wird die Nachgiebigkeit der verschraubten Bauteile verbessert, d.h. erhöht, wodurch sich die Schraubenbelastung erheblich reduziert und die Standzeit der Durchgangsschrauben verlängert wird, ohne die bei der Verwendung von Spannscheiben oder anderen Elementen gegebenen Nachteile aufzuweisen.

Der Bohrungsdurchmesser der Senkung an der Reibfläche kann wie bisher sehr klein gehalten sein und wird ausschließlich bestimmt durch den Durchmesser des Schraubenkopfes bzw. der Mutter.

Das Verhältnis der Hälfte des Durchmesserunterschieds von Senkung im Bereich der Hinterschneidung und Durchgangsbohrung zur Bodenstärke kann größer 1 gewählt werden, wobei die Bodenstärke vorzugsweise so weit zu reduzieren ist, dass die thermische und mechanische Belastung der Radbremsscheibe in diesem Bereich noch dauerhaft ertragen werden kann. Um eine Kerbwirkung zu minimieren, soll der Übergang vom Boden der Senkung zum zylindrischen Teil der Hinterschneidung durch einen möglichst groß zu wählenden Radius erfolgen.

Wie erwähnt, wölbt sich die bekannte Radbremsscheibe bei einer Bremsung in der Mitte nach außen mit einer Zugbelastung auf die Durchgangsschrauben oder es kommt zu einer Tellerung/Schirmung, mit Zug- und Biegebelastung auf die Durchgangsschrauben. Durch die Erfindung kann sich der nun nachgiebige Boden elastisch durchbiegen und wirkt funktional im Sinne eines Federelementes. Selbst bei hohen Belastungen bleibt der verschraubte Bereich der Radbremsscheibe im Wesentlichen in Kontakt mit dem Radkörper.

Durch die erhöhte Nachgiebigkeit wird die Schraubenzusatzkraft deutlich reduziert und die Lebensdauer der Schraubverbindung verlängert. Zusätzlich wird die durch thermische Ausdehnung des verschraubten Bereiches erzeugte Zusatzkraft durch den relativ dünnen Boden reduziert. Insgesamt ergibt sich somit eine bemerkenswerte Erhöhung der Standzeit und eine Verbesserung der Betriebssicherheit.

Im Übrigen lässt sich die Erfindung mit geringem fertigungstechnischen Aufwand realisieren, wobei eine Kostenminimierung dadurch erreicht wird, dass auf zusätzliche Bauteile wie Spannscheiben oder Federelemente verzichtet werden kann.

Des Weiteren zeichnet sich die Erfindung dadurch aus, dass sie für alle Arten von Radbremsscheiben eingesetzt werden kann, auch in Verbindung mit Bremsbelägen mit kleinen Reibelementen.

Nach einem weiteren Gedanken der Erfindung kann die Bodendicke partiell reduziert sein, wobei hierzu der Boden eine innen- und/oder außenseitige konzentrische Ausnehmung aufweist.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Teilausschnitt eines Schienenrades in einem Querschnitt
- Figuren 2-4: jeweils im Querschnitt ein Ausführungsbeispiel der erfindungsgemäßen Radbremsscheibe.

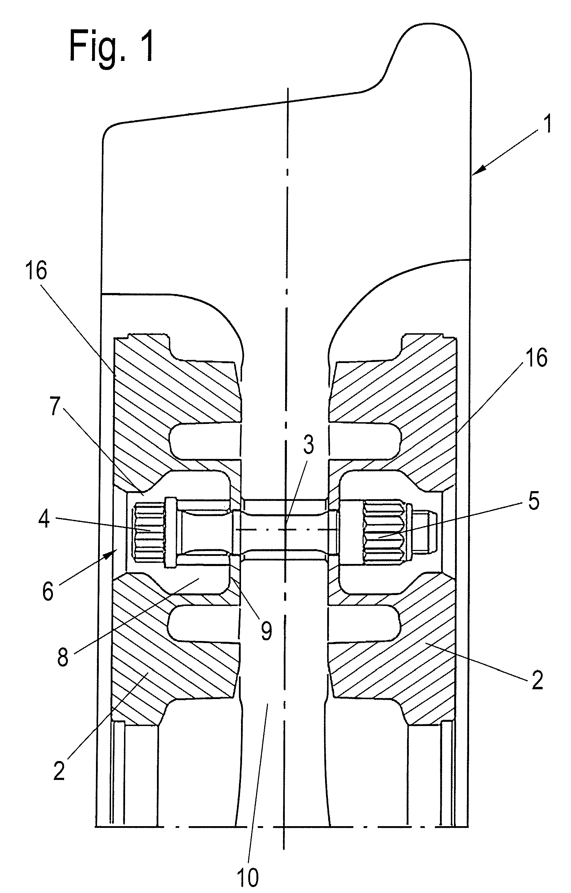

In der Figur 1 ist in einem Teilausschnitt ein Schienenrad gezeigt, mit einem Radkörper 1, der einen sich radial nach innen erstreckenden Steg 10 aufweist, an den beidseitig Radbremsscheiben 2 mittels Durchgangsschrauben 3 befestigt sind. Zur Aufnahme des Schraubenkopfes 4 einerseits und einer Mutter 5 andererseits ist in jeder Radbremsscheibe 2 eine Senkung 6 für jede Durchgangsschraube 3 vorgesehen, die in eine dem Steg 10 zugewandte Durchgangsbohrung 12 übergeht, wobei der Grund der Senkung 6 einen Boden 9 begrenzt, der andererseits eine Auflagefläche 11 bildet, die am Steg 10 des Radkörpers 1 anliegt.

Erfindungsgemäß weist jede Senkung 6 eine bis zum Grund reichende Hinterschneidung 8 auf, die zu der dem Radkörper 1 abgewandten Seite in einen zylindrischen Bereich 7 übergeht, der eine Einstecköffnung für die Durchgangsschraube 3 bildet und von einer Reibfläche 16 der Radbremsscheibe 2 ausgeht.

Der gegenüber dem Durchmesser der Hinterschneidung 8 kleinere Durchmesser des zylindrischen Bereiches 7 ist geringstmöglich gewählt und ausschließlich bestimmt vom zugeordneten Abmaß des Schraubenkopfes 4 bzw. der Mutter 5 und/oder eines Werkzeuges, mit dem die Durchgangsschraube 3 festsetzbar ist.

Wie in den Figuren sehr deutlich erkennbar ist, ist ein Übergang 13 zwischen dem Boden 9 und der Wandung der Hinterschneidung 8 stark gerundet, um eine Kerbwirkung auszuschließen bzw. zu minimieren.

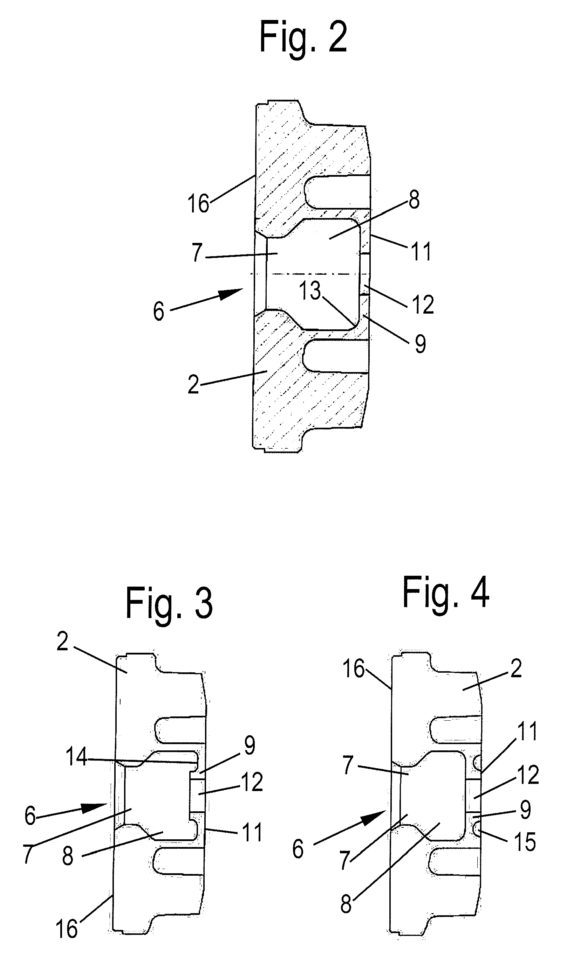

Während die Figur 2 als Einzelheit einen Querschnitt durch eine Radbremsscheibe 2 wiedergibt, wie sie in der Figur 1 in montierter Stellung erkennbar ist, geben die Figuren 3 und 4 jeweils ein weiteres Ausführungsbeispiel einer Radbremsscheibe wieder. Hier weist der Boden 9 konzentrische Ausnehmungen 14, 15 auf, die bei der in der Figur 3 gezeigten Variante auf der Innenseite, also der der Hinterschneidung 8 zugewandten vorgesehen ist, während die Ausnehmung 15 als Ringnut außenseitig in die Anlagefläche 11 eingebracht ist.

### Bezugszeichenliste

- 1: Radkörper
- 2: Radbremsscheibe
- 3: Durchgangsschraube
- 4: Schraubenkopf
- 5: Mutter
- 6: Senkung
- 7: Zylindrischer Bereich
- 8: Hinterschneidung
- 9: Boden
- 10: Steg
- 11: Anlagefläche
- 12: Durchgangsbohrung
- 13: Übergang
- 14: Ausnehmung
- 15: Ausnehmung
- 16: Reibfläche

## Patentansprüche

1. Radbremsscheiben, die beiderseits an einem Radkörper (1) eines Schienenrades angeordnet und mittels Durchgangsschrauben (3) befestigt sind, wobei der Schraubenkopf (4) jeder Durchgangsschraube (3) in einer Senkung (6) der einen Radbremsscheibe (2) und eine auf die Durchgangsschraube (3) aufgeschraubte Mutter (5) in einer Senkung (6) der anderen Radbremsscheibe (2), sich jeweils am Grund der Senkung direkt oder indirekt abstützend, einliegt, **dadurch gekennzeichnet, dass** jede Senkung (6) eine bis zum Grund reichende Hinterschneidung (8) aufweist.

2. Radbremsscheiben nach Anspruch 1, **dadurch gekennzeichnet, dass** das Verhältnis der Hälfte des Durchmesserunterschieds zwischen der Hinterschneidung (8) und einer Durchgangsbohrung (12) zur Dicke des Bodens (9) ≥ 1 ist.

3. Radbremsscheiben nach Anspruch 1 oder 2, **dadurch gekennzeichnet, dass** der Übergang vom Grund der Hinterschneidung (8) zu deren Wandung gerundet ist.

4. Radbremsscheiben nach einem der vorhergehenden Ansprüche, **dadurch gekennzeichnet, dass** der Boden (9) auf seiner der Hinterschneidung (8) zugewandten Seite und/oder auf der abgewandten Seite eine Dickenverschwächung aufweist.

5. Radbremsscheiben nach Anspruch 4, **dadurch gekennzeichnet, dass** die Dickenverschwächung durch eine konzentrische Ausnehmung (14, 15) gebildet ist.

6. Radbremsscheiben nach einem der Ansprüche 2 bis 5, **dadurch gekennzeichnet, dass** die Hinterschneidung (8) auf ihrer der Durchgangsbohrung (12) abgewandten Seite in einen zylindrischen Bereich (7) übergeht.

## Claims

1. Wheel brake discs which are arranged on both sides of a wheel body (1) of a rail wheel and fastened by means of through bolts (3), wherein the bolt head (4) of each through bolt (3) lies in a depression (6) of one wheel brake disc (2), and a nut (5) which is screwed onto the through bolt (3) lies in a depression (6) of the other wheel brake disc (2), in each case so as to be supported directly or indirectly on the base of the depression, **characterised in that** each depression (6) has an undercut (8) extending as far as the base.

2. Wheel brake discs according to claim 1, **characterised in that** the ratio of half of the diameter difference between the undercut (8) and a through bore (12) to the thickness of the base (9) is ≥ 1.

3. Wheel brake discs according to claim 1 or 2, **characterised in that** the transition from the base of the undercut (8) to the wall thereof is rounded.

4. Wheel brake discs according to one of the preceding claims, **characterised in that** the base (9) has a portion of reduced thickness on its side facing towards the undercut (8) and / or on the side facing away.

5. Wheel brake discs according to claim 4, **characterised in that** the portion of reduced thickness is formed by a concentric recess (14, 15).

6. Wheel brake discs according to one of claims 2 to 5, **characterised in that** the undercut (8) merges, on its side facing away from the through bore (12), into a cylindrical region (7).

## Revendications

1. Disque de frein monté sur roue, qui est disposé des deux côtés sur un corps (1) d'une roue de rail et qui est fixé par des boulons (3) traversant, la tête (4) de chaque boulon (3) traversant entrant dans un renfoncement (6) de l'un des disques (2) de frein -montés sur roue et un écrou (5) vissé sur le boulon (3) traversant dans un renfoncement (6) de l'autre disque (2) de frein monté sur roue, en s'appuyant directement ou indirectement respectivement au fond du renfoncement, **caractérisé en ce que** chaque renfoncement (6) a une contre-dépouille (8) allant jusqu'au fond.

2. Disque de frein monté sur roue suivant la revendication 1, **caractérisé en ce que** le rapport de la moitié de la différence de diamètre entre la contre-dépouille (8) et un trou (12) de passage à l'épaisseur du fond (9) est supérieur ou égal à 1.

3. Disque de frein monté sur roue suivant la revendication 1 ou 2, **caractérisé en ce que** la transition du fond de la dépouille (8) à sa paroi est arrondie.

4. Disque de frein monté sur roue suivant l'une des revendications précédentes, **caractérisé en ce que** le fond (9) a, du côté tourné vers la contre-dépouille (8) et/ou du côté opposé, un affaiblissement d'épaisseur.

5. Disque de frein monté sur roue suivant la revendication 4, **caractérisé en ce que** l'affaiblissement d'épaisseur est formé par un évidement (14, 15) concentrique.

6. Disque de frein monté sur roue suivant l'une des revendications 2 à 5, **caractérisé en ce que** la contre-dépouille (8) se transforme, du côté éloigné au trou (12) de passage, en une partie (7) cylindrique.
